# EUROPÄISCHE PATENTSCHRIFT

(11) **EP 2 640 949 B1**
(45) Veröffentlichungstag und Bekanntmachung des Hinweises auf die Patenterteilung: **08.11.2017**
(21) Anmeldenummer: 11763594.6
(22) Anmeldetag: 24.09.2011
(51) Int. Cl.: F02F 3/00, F02F 3/12, F02F 3/22, F02F 3/28, B22D 19/00

(54) **KÜHLKANALKOLBEN UND VERFAHREN ZU DESSEN HERSTELLUNG**
COOLING DUCT PISTON AND METHOD FOR PRODUCING THE SAME
PISTON À CANAL DE REFROIDISSEMENT ET PROCÉDÉ DE FABRICATION DUDIT PISTON À CANAL DE REFROIDISSEMENT

(30) Priorität: 17.11.2010 DE 102010051681
(43) Veröffentlichungstag der Anmeldung: 25.09.2013
(73) Patentinhaber: Daimler AG, 70327 Stuttgart (DE)
(72) Erfinder: KAISER, Timotheus, 70178 Stuttgart (DE); PFEIFER, Hermann, 73457 Essingen (DE); REHM, Wolfgang, 89077 Ulm (DE); WEISSKOPF, Karl, 73635 Rudersberg (DE)
(74) Vertreter: JENSEN & SON
(86) Internationale Anmeldenummer: PCT/EP2011/004793
(87) Internationale Veröffentlichungsnummer: WO 2012/065661

(56) Entgegenhaltungen:
- EP-A1- 0 640 759
- EP-A1- 1 612 395
- DE-A1- 1 949 581
- DE-A1-102007 003 679
- DE-A1-102009 048 124
- DE-U1- 8 217 338
- GB-A- 1 044 596
- US-A- 5 394 788

## Beschreibung

Die Erfindung betrifft einen Kühlkanalkolben und dessen Herstellungsverfahren aus einem Kolbengrundkörper und einem Belagteil.

Ein Kühlkanalkolben und seine Fertigung ist etwa aus der DE 10 2007 029 307 A1 bekannt, die einen Kolben für eine Brennkraftmaschine mit einem Kolbengrundkörper beschreibt, der einem weiteren Bauteil, das mit einem zugeordneten Brennraum unlösbar verbunden ist, zugewandt ist. Das weitere Bauteil bildet dort vollständig die dem Brennraum zugewandte Kolbenoberfläche des Kolbens. In dem Kolbengrundkörper ist ein vom Material dieses Kolbengrundkörpers vollständig umgebener Kühlkanal vorgesehen. Durch diesen wird Motoröl zur Kühlung des oberen Bereichs des Kolbens zirkulieren gelassen.

In der DE 10 2007 005 268 A1 wird zum Stand der Technik angegeben, wie Kühlkanäle durch einen verlorenen Kern hergestellt werden können. Der verlorene Kern wird so in einer Gussform angeordnet, dass er vollständig umgossen werden kann. Anschließend wird das Material des verlorenen Kerns aus dem gebildeten Kühlkanal ausgetragen, wobei darauf geachtet werden muss, dass kein Material im Kühlkanal verbleibt, um Verunreinigungen des Motorölkreislaufs zu vermeiden. Als Alternative zur Erzeugung eines Kühlkanals wird eine umlaufende Vertiefung in einer Brennraumseite eines Kolbengrundkörpers vorgesehen, die beispielsweise mit einem Blechstreifen verschlossen wird. Hierdurch wird die Bauform des Kolbens höher und es müssen die verwendeten Materialien einerseits in Bezug auf ihre thermischen und mechanischen Eigenschaften aufeinander abgestimmt werden, andererseits muss der Blechstreifen über dem Kühlkanal mit dem Kolbengrundkörper auf der Brennraumseite gefügt werden.

Der Gegenstand der DE 10 2007 005 268 A1 ist ein mehrteiliger Stahlkolben aus einem Kolbenoberteil und einem Kolbenunterteil, wobei im Bereich des Kolbenoberteils ein Ringelement mit dem Kolbenoberteil einen koaxialen und radial umlaufenden Kühlkanal bildet. Die Anlagebereiche des Ringelements sind zumindest einmal absatzförmig gestaltet und das Ringelement ist unlösbar an dem Kolbengrundkörper angefügt, wobei zumindest eine Fügestelle in der dem Brennraum zugewandten Oberfläche des Stahlkolbens liegt.

Die Schrift DE 8217338 U1 beschreibt einen Kolbenboden für einen gebauten Kolben aus schmiedbarem, warmfestem Stahl mit gewölbeartigem Kolbenbodenmittelteil, umlaufender Kolbenbodenschulter und innenseitig angeordneter, umlaufender Nabe, wobei die Kolbenbodenschulter zur Aufnahme von Kolbenringen bestimmt und zum Aufsetzen auf einen separate gefertigten Kolbenschaft eingerichtet ist, an dem auch die umlaufende Nabe anschließbar ist, dadurch gekennzeichnet, dass das Kolbenbodenmittelteil eine Kolbenbodenschulter, die aus einem Kragen eines Napfes geschmiedet ist, an den innenseitig eine umlaufende Nabe angeschmiedet ist.

Die EP 0 640 759 A1 betrifft ein partiell verstärktes Al-Gußbauteil, bestehend aus einem Al-Gußteil und einem von dessen Grundwerkstoff zumindestens partiell durch Eingießen umschlossenen sprühkompaktierten Al-Verstärkungsteil. Das Verfahren zur Herstellung eines solchen Bauteils beinhaltet das Ausbilden eines Verstärkungselementes aus sprühkompaktiertem Material, das Einsetzen dieses Elementes in die Gießform, das Umgießen des Verstärkungselementes mit einer Al-Gußlegierung und das Verfestigen der Schmelze. Ein derartiges Bauteil zeichnet sich dadurch aus, daß in den Fügezonen zwischen Al-Gußteil und Verstärkungsteil ein vollständiger,fester Materialverbund vorliegt.

Ausgehend von dem zitierten Stand der Technik ergibt sich die Aufgabe, einen verbesserten Kühlkanalkolben bereitzustellen, der einfach und robust aufgebaut und dadurch kostengünstig ist.

Diese Aufgabe wird durch den Kühlkanalkolben mit den Merkmalen des Anspruchs 1 gelöst.

Eine weitere Aufgabe der Erfindung ist es, ein vereinfachtes und effizienteres Verfahren zur Herstellung des verbesserten Kühlkanalkolbens zu schaffen, bei dem es nicht erforderlich ist, zur Bildung des Kühlkanals einen verlorenen Kern vorzusehen und einzugießen.

Das Verfahren mit den Merkmalen des Anspruchs 6 löst diese Aufgabe.

Weiterbildungen des Kühlkanalkolbens und seines Herstellungsverfahrens sind in den Unteransprüchen ausgeführt.

Insbesondere bezieht sich die Erfindung auf einen Kühlkanalkolben für Brennkraftmaschinen mit einem Kolbengrundkörper, der mit einem Belagteil verbunden ist, das einem zugeordneten Brennraum zugewandt ist, wobei das Belagteil die dem Brennraum zugewandte Kolbenoberfläche des Kühlkanalkolbens bildet. Der erfindungsgemäße Kühlkanalkolben ist dadurch gekennzeichnet, dass in der dem Brennraum zugewandten Oberfläche des Kolbengrundkörpers eine umlaufende Vertiefung vorgesehen ist, wobei das Belagteil wnigstens mit der dem Brennraum zugewandten Oberfläche des Kolbengrundkörpers fest verbunden ist und außerdem die umlaufende Vertiefung überbrückt, so dass durch die umlaufende Vertiefung und das diese überbrückende Belagteil ein Kühlkanal gebildet wird.

Der erfindungsgemäße Kühlkanalkolben ist einfach und robust aufgebaut und er weist keine Fügestelle in der dem Brennraum zugewandten Oberfläche des Kolbens auf, die durch die Betriebstemperatur des Kolbens thermisch und mechanisch besonders beansprucht wird. Zu seiner Herstellung wird ferner kein verlorener Kern benötigt, so dass nicht die Gefahr besteht, dass Festkörper des verlorenen Kerns im fertigen Kühlkanalkolben verbleiben und beispielsweise das Motoröl verunreinigen.

Es hat sich als vorteilhaft herausgestellt, wenn die feste Verbindung des Belagteils mit dem Kolbengrundkörper eine Gussverbindung, die durch zumindest teilweises Eingießen des Belagteils in den Kolbengrundkörper bereitgestellt ist, oder eine stoffschlüssige oder eine formschlüssige Verbindung ist, weil hiermit eine zuverlässige und dauerhafte und einfach zu erzeugende Verbindung erreicht wird. Abhängig von den verwendeten Materialien für das Belagteil und den Kolbengrundkörper kann eine geeignete feste Verbindung oder eine Kombination mehrerer Arten der festen Verbindung ausgewählt werden, indem etwa ein Abschnitt des Belagteils eingegossen und, abhängig von der Geometrie des Kühlkanalkolbens, ein weiterer Belagteil umgeformt und formschlüssig gefügt wird.

In einer Weiterbildung der Erfindung bildet das Belagteil eine Deckenwandung und zumindest einen Abschnitt einer Seitenwandung des Kühlkanals und ferner wenigstens teilweise die Außenumfangsseite des Kolbengrundkörpers. Hierbei ist es möglich, mit dem Belagteil auch den thermisch besonders beanspruchten Bereich der Außenumfangsseite zu bilden, der dem Brennraum am nächsten liegt.

Vorteilhaft kann in dem Abschnitt des Belagteils, der zumindest teilweise die Außenumfangsseite des Kolbengrundkörpers bildet, wenigstens eine Ringnut für einen Kolbenring vorgesehen sein, damit in dem thermisch besonders belasteten Bereich der Außenumfangsseite wenigstens ein erster Kolbenring vorgesehen werden kann. Zudem kann das Belagteil, das teilweise die Außenumfangsseite des Kolbengrundkörpers bildet, in diesem Bereich formschlüssig gefügt sein. Bei einem erfindungsgemäßen Kühlkanalkolben weist das Material des Belagteils eine höhere Wärmeleitfähigkeit auf als das Material des Kolbengrundkörpers, um die brennraumseitig auftretenden Temperaturen von dem Kolbengrundkörper abzuleiten. Dabei ist das Material des Belagteils ein ferritischer Stahl, Aluminium oder eine Aluminiumlegierung und das Material des Kolbengrundkörpers ist ein austenitischer Stahl. Durch die geeignete Auswahl der Materialpaarung von Belagteil und Kolbengrundkörper kann ein Kühlkanalkolben bereitgestellt werden, der für unterschiedliche Temperatur- und Anwendungsbereiche geeignet ist. Geeignete Materialpaarungen sind beispielsweise: Belagteil aus ferritischem Stahl / Kolbengrundkörper aus austenitischem Stahl, Belagteil aus ferritischem Stahl / Kolbengrundkörper aus Aluminium, Belagteil und Kolbengrundkörper aus Aluminium.

Ein bevorzugtes Material für den Kolbengrundkörper ist ein mit Ni, Mn, N stabilisierter austenitischer Stahl, der einen thermischen Ausdehnungskoeffizient in einem Bereich von 16 bis 21 x 10⁻⁶ K⁻¹ aufweist. Insbesondere ist der austenitische Stahl ein Fe-Cr-Ni-Austenit mit einer Zusammensetzung ist, die 0,2 bis 0,4 Gew.-% C, 8 bis 18 Gew.-% Ni, 15 bis 26 Gew.-% Cr, 0,5 bis 2 Gew.-% Si, bis zu 12 Gew.-% Mn, bis zu 2 Gew.-% W, bis zu 2 Gew.-% Nb, bis zu 2 Gew.-% Al, 0,05 bis 0,3 Gew.-% N und Fe mit einem Anteil, der einem Differenzanteil zum Erhalt von 100 Gew.-% der Stahllegierung entspricht, enthält.

Durch den definierten thermischen Ausdehnungskoeffizienten des austenitischen Stahls eignet sich dieser Austenit insbesondere zum Einsatz als Material für den erfindungsgemäßen Kolbengrundkörper, wenn das Belagteil aus Aluminium besteht. Zudem ist ein Kolbengrundkörper aus dem beschriebenen austenitischen Stahl besonders zur Verwendung in Zylinderlaufbahnen aus Aluminium geeignet.

Die Erfindung bezieht sich weiter auf ein Verfahren zur Herstellung eines vorstehend beschriebenen Kühlkanalkolbens. Dieses umfasst die Schritte:
- Bereitstellen einer festen Verbindung zumindest zwischen der einem Brennraum zugewandten Oberfläche eines Kolbengrundkörpers, in der eine umlaufende Vertiefung vorgesehen ist, und einem Belagteil und
- Überbrücken der umlaufenden Vertiefung und dadurch Ausbilden eines Kühlkanals durch die umlaufende Vertiefung und das diese überbrückende Belagteil.

Nach dem erfindungsgemäßen Verfahren ist es nicht erforderlich, zur Herstellung eines Kühlkanals in einem Kolben einen verlorenen Kern vorzusehen. Vielmehr kann bereits bei der Herstellung des Kolbengrundkörpers, beispielsweise durch Druckguss, die umlaufende Vertiefung in die dem Brennraum zugewandte Seite eingebracht werden. Diese umlaufende Vertiefung kann durch das Belagteil überbrückt werden, so dass in einer einfachen Art und Weise der Kühlkanal gebildet wird.

In Weiterbildung des Verfahrens umfasst dies den Schritt des Verbindens des Belagteils mit dem Kolbengrundkörper durch teilweises Eingießen des Belagteils in den Kolbengrundkörper, stoffschlüssiges Fügen des Belagteils mit dem Kolbengrundkörper und/oder formschlüssiges Fügen des Belagteils mit Kolbengrundkörper.

Das Verfahren umfasst nach einer Ausführungsform des Verfahrens die Schritte
- Einlegen des Belagteils in eine Kavität einer Gussform für einen Kolbengrundkörper, wobei die Form der Kavität eine Negativform für die umlaufende Vertiefung aufweist und die Negativform von dem Belagteil freigehalten wird,
- Befüllen der Gussform mit dem Material für den Kolbengrundkörper, dabei zumindest teilweise Eingießen des Belagteils,
- Abkühlen und Entformen des Kolbengrundkörpers mit dem eingegossenen Belagteil, und
- Umformen wenigstens eines nicht eingegossenen Abschnitts des Belagteils, dabei Überbrücken der umlaufenden Vertiefung und Ausbilden des Kühlkanals.

Ein wichtiger Vorteil dieser Ausführungsform besteht darin, dass das Belagteil durch Eingießen mit dem Kolbengrundkörper bereits eine feste Verbindung bildet. Zugleich wird durch eine Negativform in der Gussform die umlaufende Vertiefung für den Kühlkanal vorgesehen. Nach dem Abkühlen und Entformen kann so in einfacher Art und Weise die umlaufende Vertiefung durch Überbrücken mit dem Belagteil zu einem Kühlkanal geschlossen werden, ohne einen verlorenen Kern oder dergleichen vorzusehen.

In einer weiteren Ausführungsform des erfindungsgemäßen Verfahrens wird nach dem Überbrücken der umlaufenden Vertiefung wenigstens ein weiterer nicht eingegossener Abschnitt des Belagteils umgeformt und an der Außenumfangsseite zur Anlage gebracht, so dass das Belagteil eine Deckenwandung und zumindest einen Abschnitt einer Seitenwandung des Kühlkanals bildet und das Belagteil zumindest teilweise die Außenumfangsseite des Kolbengrundkörpers bildet. Diese spezielle Ausführungsform bietet den Vorteil, dass das Belagteil zunächst mit dem Kolbengrundkörper eingegossen wird und damit eine feste Verbindung bereitstellt, so dass das Belagteil sicher gehalten wird und zuverlässig weiter umgeformt werden kann, wobei die Überbrückung der umlaufenden Vertiefung geschaffen wird.

Diese und weitere Vorteile werden durch die nachfolgende Beschreibung unter Bezug auf die begleitenden Figuren dargelegt. Der Bezug auf die Figuren der Beschreibung dient der Unterstützung derselben und dem erleichterten Verständnis des Gegenstands. Die Figuren sind dabei lediglich eine schematische Darstellung einer bevorzugten Ausführungsform der Erfindung.

Dabei zeigen:
- Fig. 1: eine Schnittansicht eines erfindungsgemäßen Kühlkanalkolbens nach einer ersten Ausführungsform,
- Fig. 2a, 2b und 2c: Schnittansichten von Schritten eines erfindungsgemäßen Herstellungsverfahrens für einen Kühlkanalkolben.

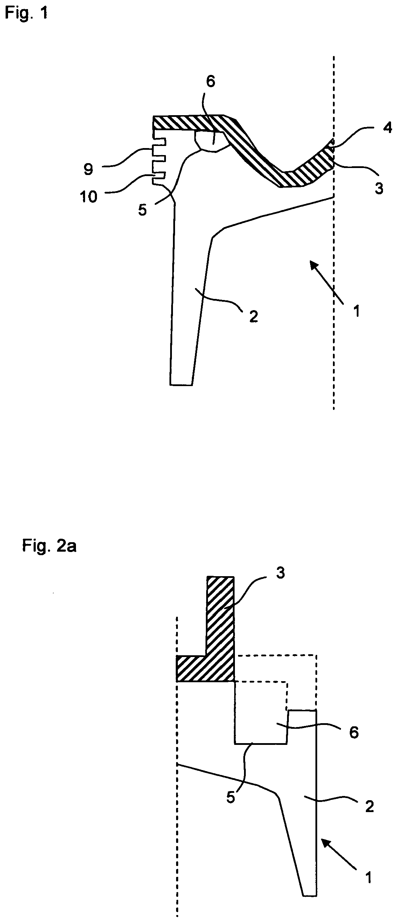

Der in Fig. 1 dargestellte Kühlkanalkolben 1 weist einen Kolbengrundkörper 2 auf. An der dem Brennraum der Brennkraftmaschine zugewandten Seite ist eine Vertiefung 5 eingebracht und auf der Außenumfangsseite 9 Ringnuten 10 für Kolbenringe vorgesehen. Die dem Brennraum zugewandte Seite des Kolbengrundkörpers 2 wird vollflächig von dem Belagteil 3 bedeckt, das die dem Brennraum zugewandte Kolbenoberfläche 4 des Kühlkanalkolbens 1 bildet, und das die Vertiefung 5 überbrückt um den Kühlkanal 6 zu bilden. Das Belagteil 3 kann ein Blech aus ferritischem Stahl oder Aluminium oder eine Graphitfasermatte sein.

Der Kolbengrundkörper 2 ist aus austenitischem Stahl als Guss bzw. Druckguss gefertigt oder durch Schmieden hergestellt worden. Es hat sich als technisch vorteilhaft herausgestellt, wenn ein Belagteil 3 aus ferritischem Stahl mit einem Kolbengrundkörper 2 aus austenitischem Stahl verbunden wird, da der ferritische Stahl eine höhere Wärmeleitfähigkeit aufweist und so die brennraumseitig auftretenden Temperaturen von dem austenitischen Stahl des Kolbengrundkörper 2 ableitet.

Ein besonders bevorzugter Werkstoff für den Kolbengrundkörper 2 ist ein Fe-Cr-Ni-Austenit mit einer Zusammensetzung von 0,2 bis 0,4 Gew.-% C, 8 bis 18 Gew.-% Ni, 15 bis 26 Gew.-% Cr, 0,5 bis 2 Gew.-% Si, bis zu 12 Gew.-% Mn, bis zu 2 Gew.-% W, bis zu 2 Gew.-% Nb, bis zu 2 Gew.-% Al, 0,05 bis 0,3 Gew.-% N und einem Rest Fe (zum Erhalt von 100 Gew.-%) mit den stahltypischen Begleitelementen. Dieser Austenit weist einen thermischen Ausdehnungskoeffizient zwischen 16 und 21 x 10⁻⁶ K⁻¹ auf und eignet sich dadurch insbesondere als Material für den Kolbengrundkörper 2, wenn das Belagteil aus Aluminium besteht.

Angesichts der in dem Brennraum der Brennkraftmaschine herrschenden Temperaturen ist es vorteilhaft, wenn das Material des Belagteils 3 eine höhere Wärmeleitfähigkeit als das Material des Kolbengrundkörpers 2 hat, um die brennraumseitig auftretenden Temperaturen von dem Kolbengrundkörper 2 abzuleiten; ferner zeigt das vorgeschlagene Material des Belagteils 3 eine gute thermische Beständigkeit hinsichtlich Korrosions- und Ermüdungseigenschaften für den im Brennraum der Brennkraftmaschine herrschenden Temperaturbereich.

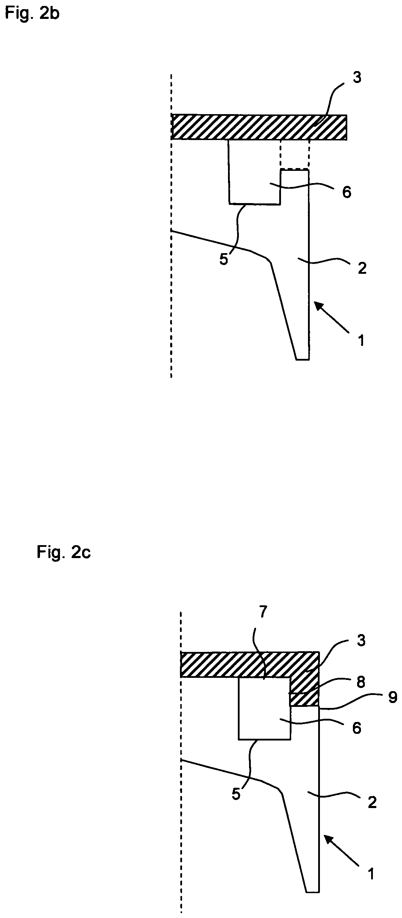

Während Fig. 1 eine bevorzugte Ausführungsform zeigt, bei der die dem Brennraum zugewandte Oberfläche des Kühlkanalkolbens 1 vollständig durch das Belagteil 3 gebildet wird, stellt Fig. 2c eine weitere Ausführungsform der Erfindung dar, bei der auch ein Teil der Außenumfangsseite 9 durch das Belagteil 3 gebildet wird.

Zur Herstellung des Kühlkanalkolbens 1 wird zunächst ein vorgefertigtes Belagteil 3, etwa ein gebogenes Blech, in eine Gussform für den Kühlkanalkolben 1 eingebracht, die ferner eine Negativform aufweist um in dem Kolbengrundkörper 2 eine umlaufende Vertiefung 5 zu erzeugen. Anschließend wird das Material für den Kolbengrundkörper 2 in die Gussform eingefüllt, wobei das vorher eingelegte Belagteil 3 eingegossen wird und wobei an der Kontaktfläche zwischen Belagteil 3 und dem Kolbengrundkörper 2 eine feste, stoffschlüssige Verbindung ausgebildet wird.

Alternativ dazu ist es möglich, nach dem Eingießen des Belagteils 3 dieses an seiner Verbindungsfuge zum Kolbengrundkörper 2, beispielsweise durch eine Ringnaht, zu verschweißen oder einzelne Schweißpunkte zwischen dem Belagteil 3 und dem Kolbengrundkörper 2 vorzusehen.

Neben dem vorstehend erwähnten Schweißen, das bevorzugt als Reibschweißen, Laserschweißen oder Induktionsschweißen ausgeführt wird, ist eine feste Verbindung auch durch Löten möglich. Ebenso kann die feste Verbindung durch An- oder Einpressen des Belagteils 3 erfolgen, wobei insbesondere an- oder eingepresste oder durch Umformung erzeugte Hinterschnitte die feste Verbindung ermöglichen.

Nach dem festen Verbinden von Belagteil 3 und Kolbengrundkörper 2 wird der nicht eingegossene Abschnitt des Belagteils 3 auf die umlaufende Vertiefung 5 umgeformt. Dies kann, wie dem Verfahrensschritt zwischen den Fig. 2a und 2b schematisch zu entnehmen ist, durch Umbiegen geschehen, so dass das Belagteil 3 zumindest die Deckenwandung 7 des Kühlkanals 6 bildet.

In dem Verfahrensschritt, der ausgeführt wird um von dem in Fig. 2b gezeigten Gegenstand zu dem in Fig. 2c zu gelangen, wird zudem ein weiterer, nicht eingegossener Abschnitt des Belagteils 3 so in Richtung des Kolbengrundkörpers 2 umgebogen, dass das Belagteil 3 die Deckenwandung 7 und einen Teil der Seitenwandung 8 des Kühlkanals 6 und dadurch einen Teil der Außenumfangsseite 9 des Kolbengrundkörpers 2 bildet. Der Kühlkanal 6 ist nun ohne die Notwendigkeit eines verlorenen Kerns geschlossen.

Während nach dem Stand der Technik ein verlorener Kern in der Gussform vorgesehen und montiert werden und nach dem Guss des Kolbenkörpers wieder entfernt werden muss, stellt das erfindungsgemäße Herstellungsverfahren eine starke Vereinfachung dar. Zudem wird ein robusterer Kolben hergestellt, der in seiner Brennraumseite keine Fügestelle wie eine Schweißnaht hat, die bei den herrschenden Betriebstemperaturen mechanisch und thermisch besonders belastet wird und eine Sollbruchstelle des Kolbens sein kann.

Aus dem einfachen und robusten Aufbau des erfindungsgemäßen Kühlkanalkolbens 1 ergeben sich insbesondere geringere Fertigungskosten für den einzelnen Kühlkanalkolben 1 und reduzierte Betriebskosten für die Brennkraftmaschine, in der dieser eingesetzt wird.

In den Figuren nicht explizit dargestellt ist, dass in der Ausführungsform, wie sie in Fig. 2c gezeigt wird, wenigstens eine Ringnut für einen Kolbenring in dem Abschnitt des Belagteils 3 vorgesehen werden kann, der einen Teil der Außenumfangsseite 9 des Kolbengrundkörpers 2 bildet. Diese Ringnut kann vorher in dem in die Gussform einzulegenden Belagteil 3 gebildet sein oder nach Abschluss der Herstellung des Kühlkanalkolbens 1 eingebracht werden.

## Patentansprüche

1. Kühlkanalkolben (1) für Brennkraftmaschinen mit einem Kolbengrundkörper (2), der mit einem Belagteil (3) verbunden ist, das einem zugeordneten Brennraum zugewandt ist, wobei das Belagteil (3) vollständig die dem Brennraum zugewandte Kolbenoberfläche (4) des Kühlkanalkolbens (1) bildet, wobei in der dem Brennraum zugewandten Oberfläche des Kolbengrundkörpers (2) eine umlaufende Vertiefung (5) vorgesehen ist, wobei das Belagteil (3) zumindest mit der dem Brennraum zugewandten Oberfläche des Kolbengrundkörpers (2) eine feste Verbindung bereitstellt und dabei die umlaufende Vertiefung (5) überbrückt, so dass die umlaufende Vertiefung (5) mit dem diese überbrückenden Belagteil (3) einen Kühlkanal (6) bildet,
**dadurch gekennzeichnet, dass**
das Material des Belagteils (3) eine höhere Wärmeleitfähigkeit aufweist als das Material des Kolbengrundkörpers (2) und ein ferritischer Stahl, Aluminium, oder eine Aluminiumlegierung ist und
das Material des Kolbengrundkörpers (2) ein austenitischer Stahl ist.

2. Kühlkanalkolben (1) nach Anspruch 1,
**dadurch gekennzeichnet, dass**
die feste Verbindung eine Gussverbindung, die durch zumindest teilweises Eingießen des Belagteils (3) in den Kolbengrundkörper (2) bereitgestellt ist, oder eine stoffschlüssige oder eine formschlüssige Verbindung ist.

3. Kühlkanalkolben (1) nach Anspruch 2,
**dadurch gekennzeichnet, dass**
das Belagteil (3) zumindest teilweise die Außenumfangsseite (9) des Kolbengrundkörpers (2) bildet und in diesem Abschnitt des Belagteils (3), wenigstens eine Ringnut für einen Kolbenring vorgesehen ist.

4. Kühlkanalkolben (1) nach Anspruch 3,
**dadurch gekennzeichnet, dass**
das Material des Kolbengrundkörpers (2) ein mit Ni, Mn, N stabilisierter austenitischer Stahl ist, der einen thermischen Ausdehnungskoeffizient in einem Bereich von 16 bis 21 x 10⁻⁶ K⁻¹ aufweist.

5. Kühlkanalkolben (1) nach Anspruch 4"
**dadurch gekennzeichnet, dass**
der austenitische Stahl ein Fe-Cr-Ni-Austenit mit einer Zusammensetzung ist, die
- 0,2 bis 0,4 Gew.-% C,
- 8 bis 18 Gew.-% Ni,
- 15 bis 26 Gew.-% Cr,
- 0,5 bis 2 Gew.-% Si,
- bis zu 12 Gew.-% Mn,
- bis zu 2 Gew.-% W,
- bis zu 2 Gew.-% Nb,
- bis zu 2 Gew.-% Al
- 0,05 bis 0,3 Gew.-% N und
- Fe mit einem Anteil, der einem Differenzanteil zum Erhalt von 100 Gew.-% der Stahllegierung entspricht,
enthält.

6. Verfahren zur Herstellung eines Kühlkanalkolbens (1) nach zumindest einem der Ansprüche 1 bis 5, mit dem
- Bereitstellen einer festen Verbindung zumindest zwischen der einem Brennraum zugewandten Oberfläche eines Kolbengrundkörpers (2), in der eine umlaufende Vertiefung (5) vorgesehen ist, und einem Belagteil (3) und
- Überbrücken der umlaufenden Vertiefung (5) und dadurch Ausbilden eines Kühlkanals (6) durch die umlaufende Vertiefung (5) und das diese überbrückende Belagteil (3),
umfassend die Schritte
- Einlegen des Belagteils (3) in eine Kavität einer Gussform für einen Kolbengrundkörper (2), wobei die Form der Kavität eine Negativform für die umlaufende Vertiefung (5) aufweist und die Negativform von dem Belagteil (3) freigehalten wird,
- Befüllen der Gussform mit dem Material für den Kolbengrundkörper (2), dabei zumindest teilweise Eingießen des Belagteils (3),
- Abkühlen und Entformen des Kolbengrundkörpers (2) mit dem eingegossenen Belagteil (3), und
- Umformen wenigstens eines nicht eingegossenen Abschnitts des Belagteils (3). dabei Überbrücken der umlaufenden Vertiefung (5) und Ausbilden des Kühlkanals (6).

7. Verfahren nach Anspruch 6,
umfassend den Schritt
- nach dem Überbrücken der umlaufenden Vertiefung (5) Umformen wenigstens eines weiteren nicht eingegossenen Abschnitts des Belagteils (3) und dabei Bereitstellen eines Formschlusses an der Außenumfangsseite (9), dabei durch das Belagteil (3) Ausbilden einer Deckenwandung (7) und zumindest eines Abschnitts einer Seitenwandung (8) des Kühlkanals (6), und Bilden zumindest eines Teils der Außenumfangsseite (9) des Kolbengrundkörpers (2) durch das Belagteil (3).

## Claims

1. Cooling duct piston (1) for internal combustion engines, comprising a piston base body (2) joined to a lining part (3) facing an associated combustion chamber, wherein the lining part (3) completely forms the piston surface (4) of the cooling duct piston (1) which faces the combustion chamber, wherein a continuous recess (5) is provided in the surface of the piston base body (2) which faces the combustion chamber, wherein the lining part (3) provides a permanent joint at least with the surface of the piston base body (2) which faces the combustion chamber and bridges the continuous recess (5), so that the continuous recess (5) forms a cooling duct (6) together with the bridging lining part (3),
**characterised in that**
the material of the lining part (3) has a higher thermal conductivity than the material of the piston base body (2) and is a ferritic steel, aluminium or an aluminium alloy, and on that
the material of the piston base body (2) is an austenitic steel.

2. Cooling duct piston (1) according to claim 1,
**characterised in that**
the permanent joint is a cast joint provided by at least partially casting the lining part (3) into the piston base body (2), or an adhesive joint, or a positive joint.

3. Cooling duct piston (1) according to claim 2,
**characterised in that**
the lining part (3) at least partially forms the outer circumferential side (9) of the piston base body (2), and **in that** at least one annular groove for a piston ring is provided in this section of the lining part (3).

4. Cooling duct piston (1) according to claim 3,
**characterised in that**
the material of the piston base body (2) is an austenitic steel which is stabilised with Ni, Mn or N and has a coefficient of thermal expansion in a range from 16 to 21 x 10⁻⁶ K⁻¹.

5. Cooling duct piston (1) according to claim 4,
**characterised in that**
the austenitic steel is an Fe-Cr-Ni austenite with a composition containing
- 0.2 to 0.4 % w/w of C,
- 8 to 18% w/w of Ni,
- 15 to 26 % w/w of Cr,
- 0.5 to 2 % w/w of Si,
- up to 12 % w/w of Mn,
- up to 2 % w/w of W,
- up to 2 % w/w of Nb,
- up to 2 % w/w of Al,
- 0,05 to 0.3 % w/w of N and
- Fe in a proportion corresponding to a differential proportion resulting in 100 % w/w of the steel alloy.

6. Method for producing a cooling duct piston (1) according to one or more of claims 1 to 5, comprising
- the provision of a permanent joint at least between a surface of a piston base body (2) which faces a combustion chamber and in which a continuous recess (5) is provided on the one hand and a lining part (3) on the other hand, and
- the bridging of the continuous recess (5), thereby forming a cooling duct (6) by means of the continuous recess (5) and the bridging lining part (3),
comprising the steps of
- placing the lining part (3) in a cavity of a casting mould for a piston base body (2), the cavity having a negative form for the continuous recess (5) and the negative form being kept clear of the lining part (3),
- filling the casting mould with the material for the piston base body (2) while at least partially casting in the lining part (3),
- cooling and demoulding the piston base body (2) with the cast-in lining part (3), and
- reshaping at least one section of the lining part (3) which is not cast in while bridging the continuous recess (5) and forming the cooling duct (6).

7. Method according to claim 6,
comprising the step of
- following the bridging of the continuous recess (5), reshaping at least one further section of the lining part (3) which is not cast in while providing a positive joint on the outer circumferential side (9), while forming by means of the lining part (3) a top wall (7) and at least a section of a side wall (8) of the cooling duct (6) and forming at least a part of the outer circumferential side (9) of the piston base body (2) by means of the lining part (3).

## Revendications

1. Piston (1) à canal de refroidissement pour des moteurs à combustion interne comprenant un corps (2) de base de piston, qui est relié à une partie (3) de revêtement, qui se trouve en regard d'une chambre de combustion associée, la partie (3) de revêtement formant entièrement la surface (4) du piston (1) à canal de refroidissement se trouvant en regard de la chambre à combustion, sur la surface se trouvant en regard de la chambre à combustion du corps (2) de base de piston étant aménagé un évidemment périphérique (5), la partie (3) de revêtement au moins avec la surface du corps (2) de base de piston se trouvant en regard de la chambre de combustion fournissant une liaison fixe et comblant ainsi l'évidement périphérique (5) de sorte que l'évidement périphérique (5) avec la partie (3) de revêtement le comblant forme un canal (6) de refroidissement, **caractérisé en ce que** le matériau de la partie (3) de revêtement présente une conductibilité thermique supérieure à celle du matériau du corps (2) de base de piston et est un acier ferritique, de l'aluminium ou un alliage d'aluminium et le matériau du corps (2) de base de piston est un acier austénitique.

2. Piston (1) à canal de refroidissement selon la revendication 1, **caractérisé en ce que** la liaison fixe est une liaison coulée, qui est fournie par au moins en partie la coulée de la partie (3) de revêtement dans le corps (2) de base de piston, ou une liaison par complémentarité de forme ou par liaison de matière.

3. Piston (1) à canal de refroidissement selon la revendication 2, **caractérisée en ce que** la partie (3) de revêtement forme au moins en partie la face périphérique extérieure (9) du corps (2) de base de piston et dans ladite section de la partie (3) de revêtement est aménagée au moins une rainure circulaire pour un segment de piston.

4. Piston (1) à canal de refroidissement selon la revendication 3, **caractérisée en ce que** le matériau du corps (2) de base de piston est un acier austénitique stabilisé par Ni, Mn, N, qui présente un coefficient de dilatation thermique dans la plage comprise entre 16 et 21 x 10"6 K1.

5. Piston (1) à canal de refroidissement selon la revendication 4, **caractérisée en ce que** l'acier austénitique est une austénite Fe-Cr-Ni comprenant une composition qui contient
- entre 0,2 et 0,4 % en poids de C,
- entre 8 et 18 % en poids de Ni,
- entre 15 et 26 % en poids de Cr,
- entre 0,5 et 2 % en poids de Si,
- jusqu'à 12 % en poids de Mn,
- jusqu'à 2 % en poids de W,
- jusqu'à 2 % en poids de Nb,
- jusqu'à 2 % en poids de Al
- entre 0,05 et 0,3 % en poids de N et
- une proportion de Fe qui correspond à la proportion différentielle par rapport à la teneur de 100 % en poids de l'alliage d'acier

6. Procédé de fabrication d'un piston (1) à canal de refroidissement selon au moins l'une quelconque des revendications 1 à 5, permettant de
- fournir une liaison fixe au moins entre la surface se trouvant en regard d'une chambre à combustion d'un corps (2) de base de piston, dans laquelle est aménagé un évidement périphérique (5) et une partie (3) de revêtement et
- combler l'évidement périphérique (2) et ainsi former un canal (6) de refroidissement par l'évidement périphérique (6) et la partie (3) de revêtement le comblant, comprenant les étapes consistant à
- placer la partie (3) de revêtement dans une cavité d'une lingotière pour un corps (2) de base de piston, la forme de la cavité présentant une forme négative pour l'évidement périphérique (5) et la forme négative étant exempte de la partie (3) de revêtement,
- remplir la lingotière du matériau pour le corps (2) de base de piston, permettant ainsi au moins la coulée partielle de la partie (3) de revêtement,
- refroidir et démouler le corps (2) de base de piston avec la partie (3) de revêtement coulée, et
- déformer au moins une section non coulée de la partie (3) de revêtement, en comblant l'évidement périphérique (5) et en formant le canal (6) de refroidissement.

7. Procédé selon la revendication 6, comprenant l'étape consistant
- une fois l'évidement périphérique (5) comblé, à déformer au moins une autre section non coulée de la partie (3) de revêtement et à ainsi fournir une complémentarité de forme sur la face périphérique extérieure (9), à ainsi former au moyen de la partie (3) de revêtement une paroi supérieure (7) et au moins une section d'une paroi latérale (8) du canal (6) de refroidissement, et à former au moins une partie de la face périphérique extérieure (9) du corps (2) de base de piston au moyen de la partie (3) de revêtement.
